(19) **Europäisches Patentamt** / **European Patent Office** / **Office européen des brevets**

(11) **EP 3 588 765 B1**

(12) **EUROPEAN PATENT SPECIFICATION**

(45) Date of publication and mention of the grant of the patent:
**17.11.2021 Bulletin 2021/46**

(21) Application number: **17898120.5**

(22) Date of filing: **28.12.2017**

(51) Int Cl.:
*H01F 30/12* (2006.01)   *H01F 27/38* (2006.01)
*H02M 5/10* (2006.01)   *H02M 7/483* (2007.01)

(86) International application number:
**PCT/JP2017/047227**

(87) International publication number:
**WO 2018/154971 (30.08.2018 Gazette 2018/35)**

(54) **POWER CONVERSION DEVICE**

STROMWANDLUNGSVORRICHTUNG

DISPOSITIF DE CONVERSION DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2017 JP 2017033532**

(43) Date of publication of application:
**01.01.2020 Bulletin 2020/01**

(73) Proprietors:
• **Kabushiki Kaisha Toshiba**
  **Minato-ku**
  **Tokyo 105-8001 (JP)**
• **Toshiba Energy Systems & Solutions Corporation**
  **Kawasaki-shi, Kanagawa 212-0013 (JP)**

(72) Inventors:
• **ARAI, Takuro**
  **Tokyo 105-8001 (JP)**
• **TACHI, Akihiko**
  **Tokyo 105-8001 (JP)**
• **SUZUKI, Daichi**
  **Tokyo 105-8001 (JP)**

(74) Representative: **AWA Sweden AB**
  **Junkersgatan 1**
  **582 35 Linköping (SE)**

(56) References cited:
**WO-A1-2016/117445   WO-A1-2016/117445**
**JP-A- S5 897 810   JP-A- H05 168 156**
**JP-A- H06 310 348   JP-A- H06 333 754**
**JP-A- 2011 216 798   JP-A- 2011 233 557**
**JP-B1- S52 207   JP-B1- S52 207**
**US-A- 5 731 969   US-A1- 2014 211 528**

## Description

FIELD

Embodiments of the present disclosure relate to a power conversion device that mutually converts power between AC and DC.

BACKGROUND

A modular multilevel converter (hereafter also referred to as an MMC) is a self-commutate power conversion device that includes unit converters (hereafter also referred to as chopper cells) each including a DC capacitor and switching elements and being subjected to a cascade connection so as to form an arm. According to the MMC, when each chopper cell in the arm output voltage pulses in different phases from each other, by shifting the ON and OFF timing of the switching element, a stepwise multilevel voltage waveform can be output. Hence, a multilevel waveform with little high harmonic components can be synthesized across a whole arm, and the output waveform can be further approximated to a sinusoidal wave.

According to such an MMC, since a control to equally divide the capacitor voltages of the respective chopper cells is enabled, a high voltage can be easily achieved by increasing the number of chopper cells. Moreover, since the number of operations of the switching element is smaller than that of two-level converters, a reduction of the conversion loss can be attained. Furthermore, since the MMC does not require an AC filter and a high-voltage withstandable capacitor, etc.,, it is inexpensive and compact.

Among such MMC, in particular, since a three-phase three-winding transformer MMC suppresses a short-circuit current by the leakage impedance of a three-phase three-winding transformer, it is unnecessary to install a large component, such as a buffer reactor, in each phase, and high-harmonic components can be surely suppressed. Hence, according to the three-phase and three-winding transformer MMC, cost reduction and downsizing can be advanced while ensuring an excellent reliability.

A power conversion device according to the preamble of claim 1 is known from US2017/211528A1. Converter transformers with concentric arrangements of primary, secondary and tertiary windings in sequence relative to the iron core are known from JPH06333754A and from JPS52207B1.

CITATION LIST

PATENT LITERATURES

Patent Document 1: JP 2016-135054 A

SUMMARY

The impedance of the three-phase three-winding transformer MMC is expressed by the impedance between the primary side and the secondary side, the impedance between the primary side and the tertiary side, and the impedance between the secondary side and the tertiary side. Regarding the reference capacity, since the smaller capacity is taken as a reference for each of between the primary side and the secondary side, between the primary side and the tertiary side, and between the secondary side and the tertiary side, it is necessary to obtain the impedance after converting those reference capacitances into the same capacity.

According to conventional three-phase three-winding transformer MMCs, since the impedance between the primary side and the secondary side and the impedance between the primary side and the tertiary side are normally different, an imbalance in the impedance is occurring. Hence, according to the conventional technologies, the imbalance in the impedance is compensated by changing the magnitude of the output voltage for each arm.

However, since the magnitude of the output voltage is changed for each arm, the largest output voltage becomes a reference, and there is a possibility that the rated voltage of the arm increases. An increase in the rated voltage of the arm may disrupt the advantages of the three-phase three-winding transformer MMC, such as cost reduction and downsizing.

Moreover, according to a power conversion device that includes a transformer, it is necessary to set the size of an iron core so that the iron core is not saturated by DC magnetic flux, etc. Accordingly, in view of ensuring a function as the transformer, the iron core tends to become large. Therefore, in view of the conventional technologies, in order to achieve downsizing of the power conversion device, it is necessary to efficiently downsize the iron core.

Embodiments of the present disclosure are to provide a power conversion device which achieves cost reduction and downsizing by having a secondary winding and a tertiary winding placed to be vertically symmetrical or having a primary winding, the secondary winding and the tertiary winding placed concentrically in sequence.

In order to address the above technical problems, embodiment of the present disclosure provides a power conversion device that includes:

 arms corresponding to respective three phases, each of the arms including:

  a positive-side arm which includes a plurality of converters connected in series and which has a first end connected to a positive-side DC terminal, each of the converters comprising a plurality of switching element connected in series and a capacitor connected in parallel with the plurality of switching element connected in series; and a negative-side arm which includes a plurality of converters connected in series and which has a first end connected to a negative-side DC terminal, each of the converters comprising a plurality of switching element connected in series and a capacitor connected in parallel with the plurality of switching element connected in series;

a converter transformer including a primary winding connected to the three phase AC, and a secondary winding and a tertiary winding provided between a second end of the positive-side arm and a second end of the negative-side arm; and
a tank which stores the converter transformer, in which:

the converter transformer includes an iron core, the primary winding, and the secondary winding and the tertiary winding placed adjacent to the primary winding,
the secondary winding and the tertiary winding are placed to be in vertically symmetrical to each other with an axial direction of the iron core being a vertical direction to equalize an impedance between a primary side and a secondary side, and an impedance between the primary side and a tertiary side,
a gap is provided between the secondary winding and the tertiary winding, and
the secondary winding and the tertiary winding are placed so that a DC leakage flux generated from the secondary winding passes through the iron core and the gap and a DC leakage flux generated from the secondary winding passes through the tank and the gap.

BRIEF DESCRIPTION OF DRAWINGS

FIG. 1 is a structural diagram illustrating placement of a winding according to a first example not covered by the claims which is useful for understanding the present invention;
FIG. 2 is an schematic diagram illustrating placement of the winding according to the first example;
FIG. 3 is a circuit structural diagram according to the first example;
FIG. 4 is a circuit structural diagram illustrating a unitary unit according to the first example;
FIG. 5 is a structural diagram illustrating placement of the winding according to a first embodiment;
FIGS. 6(a) and 6(b) are structural diagrams when a primary winding is omitted to describe the effect of the first
embodiment, FIG. 6(a) is a case in which the windings are placed vertically, and FIG. 6(b) is a case in which the windings are placed concentrically;
FIG. 7 is a structural diagram illustrating placement of the winding according to another example not covered by the claims;
FIG. 8 is a structural diagram illustrating placement of the winding according to another embodiment;
FIG. 9 is a circuit structural diagram according to another example not covered by the claims; and
FIGS. 10(a) and (b) are each a structural diagram illustrating placement of the winding according to another example not covered by the claims.

DETAILED DESCRIPTION

[1] First Example

[Structure]

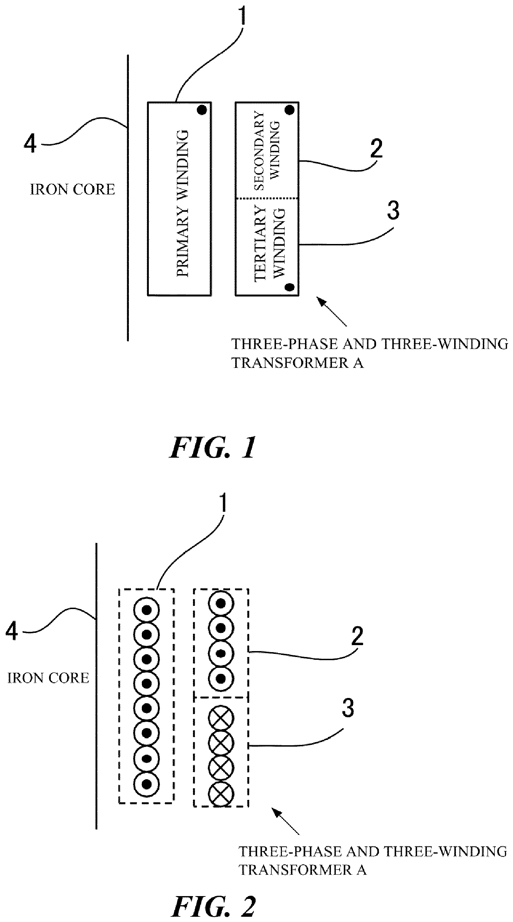

A structure according to a first example not covered by the claims which is useful for understanding the present invention will be described in detail with reference to FIGS. 1 to 4. A first embodiment is a power conversion device which is a three-phase three-winding transformer MMC that is connected between a three-phase AC system and a DC system, and which executes power conversion from a three-phase AC power supply of 50 Hz into DC via the three-phase three-winding transformer that is an insulation transformer.

(Placement Structure of Winding)

A placement structure of a winding according to the first example will be described with reference to FIGS. 1 and 2. As illustrated in these figures, a three-phase three-winding transformer A applied for a three-phase three-winding transformer MMC includes a primary winding 1, a secondary winding 2, a tertiary winding 3, and an iron core 4. The primary winding 1 is placed adjacent to the iron core 4.
The secondary winding 2 and the tertiary winding 3 are placed so as to be superimposed vertically with the axial direction of the iron core 4 being the vertical direction. In this example, the secondary winding 2 is placed at the upper side, and the tertiary winding 3 is placed at the lower side relative to the secondary winding 2. These secondary winding 2 and the tertiary winding 3 are placed outwardly relative to the primary winding 1 when viewed from the iron core 4. The primary winding 1 is placed between the iron core 4 and the secondary winding 2 and the tertiary winding 3.
The secondary winding 2 and the tertiary winding 3 are configured so as to be vertically symmetrical with each other. In each of the windings 1 to 3, a side with a black dot is a positive side. The primary winding 1 and the secondary winding 2 have respective upper ends as the positive side, and the tertiary winding 3 has the lower end as the positive side. Since the positive side of the secondary winding 2 and that of the tertiary winding 3 are vertically opposite to each other, the winding direction of the secondary winding 2 and the winding direction of the tertiary winding 3 are set to be in opposite directions to each other (see FIG. 2 that is an schematic diagram).

(Circuit Structure)

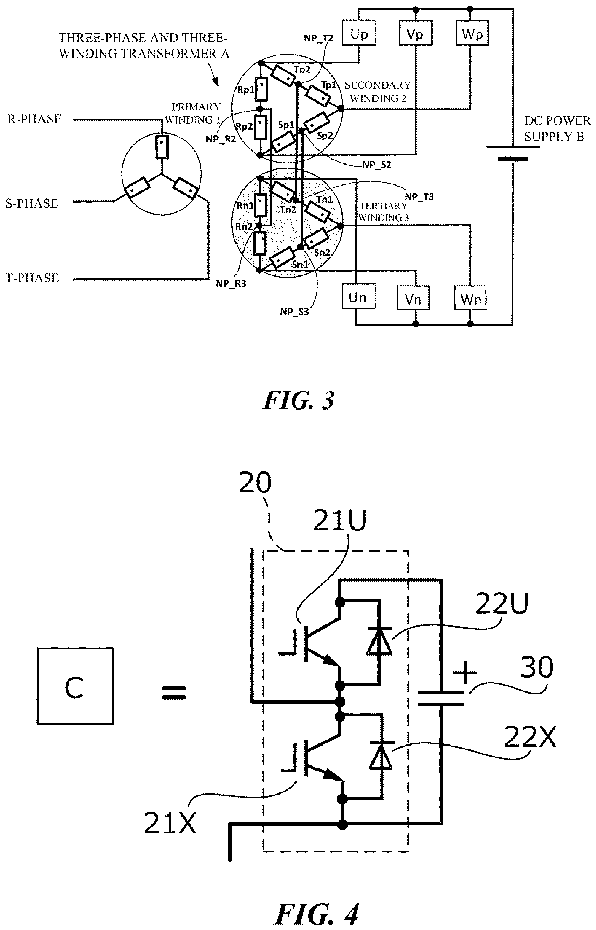

FIG. 3 is a circuit structural diagram according to the first example. As illustrated in FIG. 3, according to the first example, the three-phase three-winding transformer A that includes the primary winding 1, the secondary winding 2, and the tertiary winding 3, a DC power supply B, positive-side unit arms Up, Vp, and Wp, and negative-side unit arms Un, Vn and Wn are provided.

(Three-Phase Three-Winding Transformer)

According to the three-phase three-winding transformer A, the primary winding 1 is subjected to a star connection, and is connected to an R-phase, an S-phase, and a T-phase which are the three phases of the 50-Hz power supply. The secondary winding 2 and the tertiary winding 3 are each subjected to a delta connection.

The three-phase three-winding transformer A employs a structure which divides the transformer iron core for each phase of the primary winding 1, and which has the iron core for the secondary winding 2 and the iron core for the tertiary winding 3 individually. The winding ratio between the primary winding 1 and the secondary winding 2 is 1:1. The three-phase three-winding transformer A is provided so as to be divided into the positive side and the negative side for each phase. Also in FIG. 3, the side to which the black dot is given in each winding indicates the positive side.

According to the three-phase three-winding transformer A, the neutral point of the secondary winding 2 and that of the tertiary winding 3 in each phase are connected to each other in the same phase. That is, an R-phase neutral point NP_R2 of the secondary winding 2 and an R-phase neutral point NP_R3 of the tertiary winding 3 are connected to each other, an S-phase neutral point NP_S2 of the secondary winding 2 and an S-phase neutral point NP_S3 of the tertiary winding 3 are connected to each other, and a T-phase neutral point NP_T2 of the secondary winding 2 and a T-phase neutral point NP_T3 of the tertiary winding 3 are connected to each other.

(Unit Arm)

Respective one ends of the unit arms Up, Vp, and Wp in each phase at the positive side are connected to the positive side of the DC power supply B, and respective other ends in each phase are connected to each output terminal of the secondary winding 2. That is, the unit arms Up, Vp, and Wp at the positive side are connected to the secondary-winding-2 side. More specifically, the unit arm Up is connected to a winding Rp1 and a winding Tp2, the unit arm Vp is connected to a winding Sp1 and a winding Rp2, and the unit arm Wp is connected to a winding Tpl and a winding Sp2.

Moreover, respective one ends of the unit arms Un, Vn, and Wn in each phase at the negative side are connected to the negative side of the DC power supply B, and respective other ends in each phase are connected to each output terminal of the tertiary winding 3. The unit arms Un, Vn, and Wn at the negative side are connected to the tertiary-winding-3 side. That is, the unit arm Un is connected to a winding Rn1 and a winding Tn2, the unit arm Vn is connected to a winding Sn1 and a winding Rn2, and the unit arm Wn is connected to a winding Tn1 and a winding Sn2.

(Unitary unit)

Each unit arm Up, Vp, Wp, Un, Vn, and Wn is provided with a single or a plurality of unitary units C. When the plurality of unitary units C is provided, the unitary units C are connected in series. The unitary unit C includes a chopper bridge unit converter. The unitary unit C will be described with reference to FIG. 4 that is a circuit structural diagram.

As illustrated in FIG. 4, according to the unitary unit C, a leg 20 (indicated by a dotted line) and a capacitor 30 are connected in parallel with each other. The leg 20 has self-extinguishing switching elements 21U and 21X connected in series. An example of these switching elements 21U and 21X is an IGBT that has a rating of substantially 4500 V, and free wheeling diodes 22U and 22X are connected in reverse-parallel with these switching elements.

[Action and Effect]

It is necessary to cause a DC circulating current to flow through the MMC, and this DC circulating current flows through the secondary winding 2 and the tertiary winding 3 of the three-phase three-winding transformer A. When the DC circulating current flows through the windings 2 and 3, DC magnetic fluxes are generated and the iron core 4 becomes likely to be saturated. Since saturation of the iron core 4 disables a function as the transformer, according to conventional technologies, it is necessary to increase the size of the iron core 4 so as not to be saturated.

In contrast, according to the first example, the secondary winding 2 and the tertiary winding 3 are placed vertically and adjacent to the primary winding 1, and these secondary winding 2 and tertiary winding 3 are formed so as to be vertically symmetrical to each other. Moreover, the winding direction of the secondary winding 2 and the winding direction of the tertiary winding 3 are opposite to each other. Hence, according to the first example, the DC magnetic flux from the secondary winding 2 and the DC magnetic flux from the tertiary winding 3 can be in opposite directions to each other, and the DC magnetic flux that causes a saturation of the iron core 4 can be canceled by the secondary winding 2 and the tertiary winding 3.

According to such a first example, from in view of the impedance, the secondary winding 2 and the tertiary winding 3 can be structurally equal relative to the primary winding 1. Accordingly, the impedance between the primary side and the secondary side, and the impedance between the primary side and the tertiary side become equal. Therefore, no unbalance in the impedance does occur, and it is unnecessary to change the magnitude of the output voltage for each arm to compensate the unbalance in the impedance. Consequently, a reduction of the rated voltage can be achieved in comparison with the conventional technologies in which the largest output voltage is taken as a reference. Such a first example contributes enhancement of the cost reduction and the downsizing.

Moreover, according to the circuit scheme of the first example, the three-phase three-winding transformer A as an insulation transformer is provided in the path for the DC circulating current. Hence, an increase of the DC circulating current due to the leakage inductance components of the three-phase three-winding transformer A can be prevented. That is, according to the first example, the leakage inductance components of the three-phase three-winding transformer A can work as a reactor. Therefore, high-harmonic components can be surely suppressed to a level that does not affect other devices.

According to the above-described first example, the present disclosure is applicable to the three-phase three-winding transformer MMC that has the plurality of unitary units C connected in series in multi stages, can suppress the high-harmonic components due to the leakage impedance by the three-phase three-winding transformer A, and can eliminate a high-cost and large-size component such as a buffer reactor, thereby further advancing cost reduction and downsizing.

Moreover, according to the first example, in the three-phase and three-winding transformer A, the secondary winding 2 and the tertiary winding 3 are each subjected to the delta connection, and respective neutral points of the secondary winding 2 and of the tertiary winding 3 in the same phase are connected to each other between the secondary winding 2 and the tertiary winding 3 in each phase. Hence, a generation of a high-harmonic current unintentionally output can be suppressed theoretically.

Accordingly, the high-harmonic current does not become an excitation current of the three-phase three-winding transformer A, and does not distort the system voltage, and a filter, etc., for high-harmonic component absorption is unnecessary. According to such a first example, cost reduction and downsizing can be surely achieved while ensuring an excellent reliability.

[2] First Embodiment

[Structure]

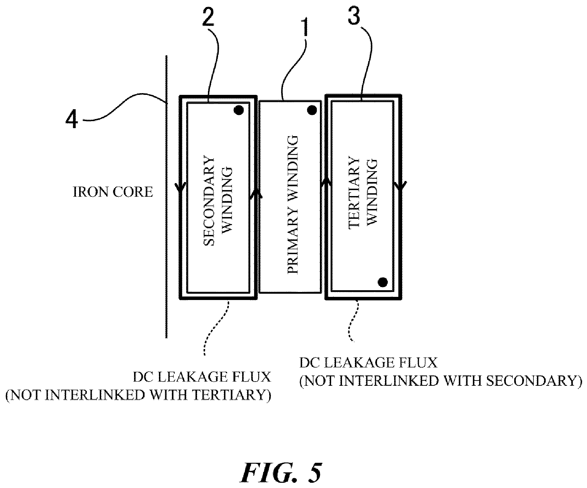

A structure according to a first embodiment will be described in detail with reference to FIG. 5. The basic structure of the first embodiment is the same as that of the first example, and the same reference numeral will be given to the same component.

According to the first embodiment, as illustrated in FIG. 5, the secondary winding 2, the primary winding 1, and the tertiary winding 3 are concentrically placed in this sequence from the iron-core-4 side. According to a such winding placement, the secondary winding 2 and the tertiary winding 3 are placed so as to hold therebetween the primary winding 1.

[Action and Effect]

As described above, although DC magnetic fluxes are generated due to the DC circulating current which flows through the MMC and which flows through the secondary winding 2 and the tertiary winding 3, DC leakage fluxes by the secondary winding 2 which is not interlinked with the tertiary winding 3 are generated around the secondary winding 2, and DC leakage fluxes by the tertiary winding 3 which is not interlinked with the secondary winding 2 are generated around the tertiary winding 3. According to the first example, since the secondary winding 2 and the tertiary winding 3 are placed vertically, the DC leakage fluxes intensively pass through the iron core 4, and such a core is likely to be saturated.

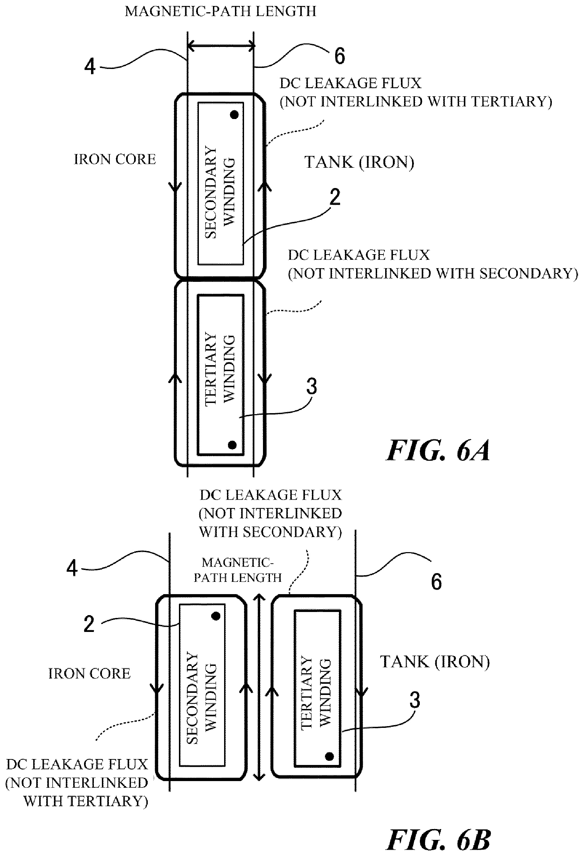

Effects of the first embodiment will be described with reference to FIG. 6. FIG. 6(a) illustrates a case in which the windings 2 and 3 are placed vertically, and FIG. 6 (b) illustrates a case in which the windings 2 and 3 are placed concentrically. As illustrated in FIG. 6(a), when the secondary winding 2 and the tertiary winding 3 are placed vertically, the leakage fluxes by the windings 2 and 3 pass through the iron core 4 and an iron-made tank 6 that stores therein the transformer. Accordingly, the length of a gap between the secondary winding 2 and the tertiary winding 3 is oriented in the widthwise direction of the windings 2 and 3.

In contrast, when the secondary winding 2 and the tertiary winding 3 are placed concentrically, the length of the gap therebetween is oriented in the height direction of the windings 2 and 3. In general, the windings 2 and 3 have the height dimension greater than the widthwise dimension. Accordingly, as illustrated in FIG. 6(b), when the secondary winding 2 and the tertiary winding 3 are placed concentrically, the gap therebetween becomes longer than a case in which the secondary winding 2 and the tertiary winding 3 are placed vertically. Since the magnetic flux and the magnetic-path length are in a reverse proportion relation, a magnetic flux $\phi$ becomes small when the windings 2 and 3 are placed concentrically.

A magnetic circuit with iron and air will be described, and the formula thereof is as follows.

$$NI = \phi \times (h1/\mu1/S + h2/\mu2/S)$$

In the above formula, NI is magnetomotive force, $\phi$ is magnetic flux, S is cross-sectional area, $\mu1$ is permeability of iron part, $\mu2$ is permeability of air part, h1 is magnetic-path length of iron part, and h2 is magnetic-path length of air part. The magnetic-path length of the air part indicates the length of the gap between the secondary winding 2 and the tertiary winding 3.

First, a relation between the magnetic flux and the magnetic-path length will be described, and in the case of the same magnetomotive force, the magnetic flux $\phi$ is reverse proportional to the magnetic-path length h from the above formula. In contrast, when iron and air are considered, since the permeability is 5000 times different, the magnetic-path length h1 of the iron part can be ignored. Hence, if it is assumed that the cross-sectional areas S are uniform, the magnetic flux is reverse proportional to the magnetic-path length h2 of the air part, that is, the length of the gap between the secondary winding 2 and the tertiary winding 3.

When the secondary winding 2 and the tertiary winding 3 are placed vertically, the magnetic-path length h2 of the air part is short, and the magnetic flux $\phi$ is large. Accordingly, the leakage fluxes of the secondary winding 2 and the leakage fluxes of the tertiary winding 3 each pass through the iron core 4. Hence, the site of the iron core 4 where the leakage fluxes pass becomes broad, and the saturated sites increases.

In contrast, when the secondary winding 2 and the tertiary winding 3 are placed concentrically as in the second embodiment, the magnetic-path length h2 of the air part is long, and the magnetic flux $\phi$ is little. Accordingly, the leakage fluxes are not likely to pass through the iron core 4, and such a core is not likely to be saturated. According to such a first embodiment, the iron core 4 can be downsized. This contributes to the downsizing of the power conversion device.

Moreover, according to the first embodiment, since a structure in which the primary winding 1 is wrapped by the secondary winding 2 and the tertiary winding 3 is employed, the impedance between the primary side and the secondary side, and the impedance between the primary side and the tertiary side become equal. Hence, like the first example, unbalance does not occur in the impedance, and it is unnecessary to change the magnitude of the output voltage for each arm to compensate the unbalance in the impedance. This surely achieves cost reduction and downsizing while ensuring an excellent reliability.

[3] Other Examples useful for understanding the present invention

The above-described embodiments are merely examples, and are not intended to limit the scope of the present disclosure, and the present disclosure can be carried out in other various forms, and various omissions, replacements, and modifications can be made thereto without departing from the scope of the present disclosure. Such embodiments and modified forms thereof are within the scope of the present disclosure as defined by the appended claims.

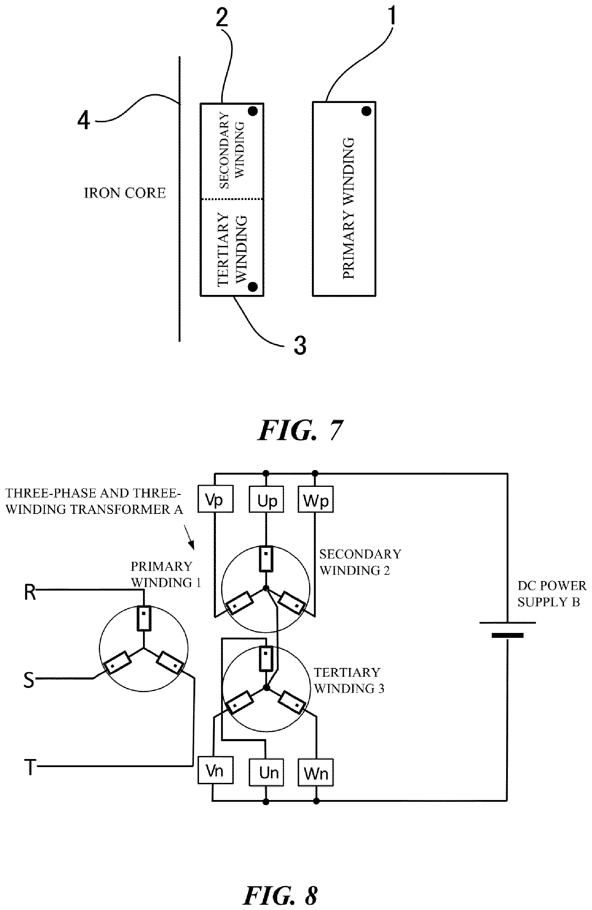

(1) The following examples are the modified examples of the first example. That is, as long as the secondary winding 2 and the tertiary winding 3 are placed so as to be vertically symmetrical with the axial direction of the iron core 4 being the vertical direction, the number of turns of the winding and the material thereof, etc., can be selected as appropriate. For example, as illustrated in FIG. 7, the secondary winding 2 and the tertiary winding 3 may be placed adjacent to the iron core 4, and the primary winding 1 may be provided outwardly relative to the secondary winding 2 and the tertiary winding 3 when viewed from the iron core 4. That is, the secondary winding 2 and tertiary winding 3 may be provided between the iron core 4 and the primary winding 1. According to such an embodiment, since the long insulation distance can be provided between the primary winding 1 that is a high-voltage side and the iron core 4, the reliability further improves.

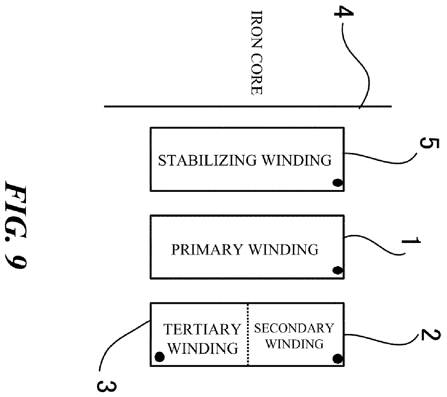

(2) As illustrated in FIG. 8, when the secondary winding 2 and the tertiary winding 3 are each subjected to the star connection in the three-phase three-winding transformer A, a stabilizing winding 5 is necessary. Hence, according to the embodiment illustrated in FIG. 9, the stabilizing winding 5 is placed between the primary winding 1 and the iron core 4. According to this embodiment, by having the stabilizing winding 5 subjected to the delta connection in each phase, high-harmonic can be refluxed. Therefore, the high-harmonic can be further surely suppressed.

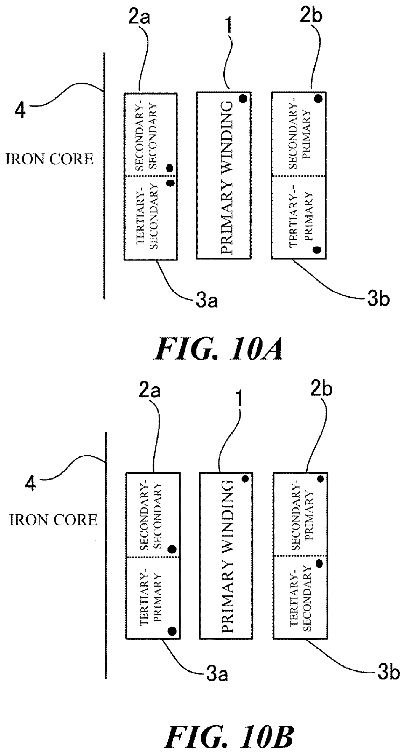

(3) According to the three-phase three-winding transformer MMC that employs the above-described delta connection structure, the secondary winding 2 and the tertiary winding 3 may be respectively divided into two pieces, and a total of five windings including the single primary winding 1 may be adopted. For example, according to the embodiment illustrated in FIGS. 10(a) and (b), the secondary winding 2 and the tertiary winding 3 are respectively divided into two pieces in the radial direction of the iron core 4, and placed. These windings 2 and 3 respectively include internal windings 2a and 3a near the iron core 4, and external windings 2b and 3b located outwardly. The internal winding 2a and the external winding 2b, and the internal winding 3a and the external winding 3b are connected in series.

With respect to the secondary winding 2, in both FIGS. 10(a) and (b), the lower end of the internal winding 2a is the positive side, and the upper end of the external winding 2b is the positive side. With respect to the tertiary winding 3, the direction differs between FIG. 10(a) and (b). That is, in FIG. 10(a), the upper end of the internal winding 3a is the positive side, and the lower end of the external winding 3b is the positive side. In FIG. 10 (b), the lower end of the internal winding 3a is the positive side, and the upper end of the external winding 3b is the positive side. According to such an embodiment, by dividing the secondary winding 2 and the tertiary winding 3 respectively into two pieces, it becomes possible to efficiently prevent the iron core 4 from being saturated, and the loss by the windings 2 and 3 can be surely suppressed. Therefore, such embodiments can achieve an excellent heat dissipation effect.

(4) The modified examples of the first embodiment include the following examples. That is, when the primary winding 1, the secondary winding 2, and the tertiary winding 3 are placed concentrically, the sequence can be changed as appropriate, and instead of having the primary winding 1 wrapped by the secondary winding 2 and the tertiary winding 3 as the first embodiment, the primary winding 1, the secondary winding 2, and the tertiary winding 3 may be placed concentrically in this sequence from the iron-core-4 side, or conversely, the tertiary winding 3, the secondary winding 2, and the primary winding 1 may be placed concentrically in this sequence from the iron-core-4 side.

(5) In the three-phase three-winding-transformer MMC, the number of unitary units installed in each unit arm, the number of unit arms, and the number of divided pieces of winding, etc., can be changed as appropriate. Moreover, the power conversion device according to the present disclosure is capable of executing a power conversion from DC to AS by the similar structure, or conversely, is capable of executing a power conversion from AC to DC.

REFERENCE SIGNS LIST

| 1 | Primary winding |
|---|---|
| 2 | Secondary winding |
| 3 | Tertiary winding |
| 4 | Iron core |
| 5 | Stabilizing winding |
| 6 | Tank |
| A | Three-phase three-winding transformer |
| B | DC power supply |
| C | Unitary unit |
| Up, Vp, Wp | Unit arm at the positive side |
| Un, Vn, Wn | Unit arm at the negative side |
| 20 | Leg |
| 21U, 21X | Switching element |
| 22U, 22X | Free wheeling diode |
| 30 | Capacitor |

**Claims**

1.  A power conversion device comprising:

arms corresponding to respective three phases, each of the arms comprising:

a positive-side arm ($U_p$, $V_p$, $W_p$) which comprises a plurality of converters connected in series and which has a first end connected to a positive-side DC terminal, each of the converters comprising a plurality of switching elements (21U, 21X) connected in series and a capacitor (30) connected in parallel with the plurality of switching element connected in series; and
a negative-side arm ($U_n$, $V_n$, $W_n$) which comprises a plurality of converters connected in series and which has a first end connected to a negative-side DC terminal, each of the converters comprising a plurality of switching elements (21U, 21X) connected in series and a capacitor (30) connected in parallel with the plurality of switching element connected in series;

a converter transformer comprising a primary winding (1) connected to three phase AC, and a secondary winding (2) and a tertiary winding (3) provided between a second end of the positive-side arm and a second end of the negative-side arm;
wherein:

the converter transformer comprises an iron core (4), the primary winding, and the secondary winding and the tertiary winding placed adjacent to the primary winding, the primary winding, the secondary winding, and the tertiary winding are placed concentrically in sequence relative to the iron core to equalize an impedance between a primary side and a secondary side, and an impedance between the primary side and a tertiary side, **characterized in that** the power conversion device comprises a tank which stores the converter transformer, and a gap is provided between the secondary winding and the tertiary winding, and the secondary winding and the tertiary winding are placed so that a DC leakage flux generated from the secondary winding passes through the iron core and the gap and a DC leakage flux generated from the secondary winding passes through the tank and the gap.

2.  The power conversion device according to claim 1, wherein the primary winding is placed between the secondary winding and the tertiary winding.

3.  The power conversion device according to claim 1 to 2, wherein a winding direction of the secondary winding and a winding direction of the tertiary winding are opposite to each other.

4. The power conversion device according to any one of claims 1 to 3, wherein the secondary winding and the tertiary winding are respectively subjected to a star connection, and a neutral point of the secondary winding and a neutral point of the tertiary winding are connected to each other.

5. The power conversion device according to claim 4, further comprising a stabilizing winding placed adjacent to the iron core.

6. The power conversion device according to any one of claims 1 to 3, wherein the secondary winding and the tertiary winding are respectively subjected to a delta connection, and a neutral point of the secondary winding and a neutral point of the tertiary winding in a same phase are connected to each other for each phase.

7. The power conversion device according to claim 6, wherein the secondary winding and the tertiary winding are each divided into a plurality of pieces in a radial direction of the iron core.

## Patentansprüche

1. Leistungsumwandlungsvorrichtung, die umfasst: Zweige, die jeweiligen drei Phasen entsprechen, wobei jeder der Zweige umfasst:

einen Positive-Seite-Zweig ($U_p$, $V_p$, $W_p$), der mehrere Wandler umfasst, die in Reihe geschaltet sind, und der ein erstes Ende aufweist, das mit einem Positive-Seite-Gleichstromanschluss verbunden ist, wobei jeder der Wandler mehrere Schaltelemente (21U, 21X), die in Reihe geschaltet sind, und einen Kondensator (30) umfasst, der mit den mehreren in Reihe geschalteten Schaltelementen parallel geschaltet ist; und einen Negative-Seite-Zweig ($U_n$, $V_n$, Wn), der mehrere Wandler umfasst, die in Reihe geschaltet sind, und der ein erstes Ende aufweist, das mit einem Negative-Seite-Gleichstromanschluss verbunden ist, wobei jeder der Wandler mehrere Schaltelemente (21U, 21X), die in Reihe geschaltet sind, und einen Kondensator (30) umfasst, der mit den mehreren in Reihe geschalteten Schaltelementen parallel geschaltet ist; einen Wandlertransformator, der eine Primärwicklung (1), die mit dem Dreiphasenwechselstrom verbunden ist, und eine Sekundärwicklung (2) und eine Tertiärwicklung (3) umfasst, die zwischen einem zweiten Ende des Positive-Seite-Zweigs und einem zweiten Ende des Negative-Seite-Zweigs bereitgestellt sind; wobei:

der Wandlertransformator einen Eisenkern (4) umfasst, wobei die Primärwicklung und die Sekundärwicklung und die Tertiärwicklung der Primärwicklung benachbart platziert sind, die Primärwicklung, die Sekundärwicklung und die Tertiärwicklung konzentrisch in Folge in Bezug auf den Eisenkern platziert sind, um eine Impedanz zwischen einer Primärseite und einer Sekundärseite und eine Impedanz zwischen der Primärseite und einer Tertiärseite auszugleichen, **dadurch gekennzeichnet, dass** die Leistungsumwandlungsvorrichtung einen Tank umfasst, der den Wandlertransformator lagert, und ein Spalt zwischen der Sekundärwicklung und der Tertiärwicklung bereitgestellt ist, und die Sekundärwicklung und die Tertiärwicklung derart platziert sind, dass ein von der Sekundärwicklung erzeugter Gleichstrom-Leckfluss den Eisenkern und den Spalt durchquert und ein von der Sekundärwicklung erzeugter Gleichstrom-Leckfluss den Tank und den Spalt durchquert.

2. Leistungsumwandlungsvorrichtung nach Anspruch 1, wobei die Primärwicklung zwischen der Sekundärwicklung und der Tertiärwicklung platziert ist.

3. Leistungsumwandlungsvorrichtung nach Anspruch 1 bis 2, wobei eine Wicklungsrichtung der Sekundärwicklung und eine Wicklungsrichtung der Tertiärwicklung entgegengesetzt zueinander sind.

4. Leistungsumwandlungsvorrichtung nach einem der Ansprüche 1 bis 3, wobei die Sekundärwicklung und die Tertiärwicklung jeweils an eine Sternschaltung gebunden sind und ein Sternpunkt der Sekundärwicklung und ein Sternpunkt der Tertiärwicklung miteinander verbunden sind.

5. Leistungsumwandlungsvorrichtung nach Anspruch 4, die ferner eine Stabilisierungswicklung umfasst, die dem Eisenkern benachbart platziert ist.

6. Leistungsumwandlungsvorrichtung nach einem der Ansprüche 1 bis 3, wobei die Sekundärwicklung und die Tertiärwicklung jeweils an eine Dreieckschaltung gebunden sind und ein Sternpunkt der Sekundärwicklung und ein Sternpunkt der Tertiärwicklung in einer gleichen Phase für jede Phase miteinander verbunden sind.

**7.** Leistungsumwandlungsvorrichtung nach Anspruch 6, wobei die Sekundärwicklung und die Tertiärwicklung jeweils in mehrere Teile in einer radialen Richtung des Eisenkerns unterteilt sind.

## Revendications

**1.** Dispositif de conversion d'énergie comprenant :

des bras correspondant à trois phases respectives, chacun des bras comprenant :

un bras de côté positif ($U_p$, $V_p$, $W_p$) qui comprend une pluralité de convertisseurs reliés en série et qui a une première extrémité reliée à une borne CC de côté positif, chacun des convertisseurs comprenant une pluralité d'éléments de commutation (21U, 21X) reliés en série et un condensateur (30) relié en parallèle à la pluralité d'éléments de commutation reliés en série ; et
un bras de côté négatif ($U_n$, $V_n$, $W_n$) qui comprend une pluralité de convertisseurs reliés en série et qui a une première extrémité reliée à une borne CC de côté négatif, chacun des convertisseurs comprenant une pluralité d'éléments de commutation (21U, 21X) reliés en série et un condensateur (30) relié en parallèle à la pluralité d'éléments de commutation reliés en série ;

un transformateur convertisseur comprenant un enroulement primaire (1) relié au courant alternatif, CA, triphasé, et un enroulement secondaire (2) et un enroulement tertiaire (3) prévus entre une deuxième extrémité du bras de côté positif et une deuxième extrémité du bras de côté négatif ;
dans lequel :

le transformateur convertisseur comprend un noyau de fer (4), l'enroulement primaire, et l'enroulement secondaire et l'enroulement tertiaire placés adjacents à l'enroulement primaire,
l'enroulement primaire, l'enroulement secondaire et l'enroulement tertiaire sont placés de manière concentrique en séquence par rapport au noyau de fer pour égaliser une impédance entre un côté primaire et un côté secondaire, et une impédance entre le côté primaire et un côté tertiaire,
**caractérisé en ce que** le dispositif de conversion d'énergie comprend un réservoir qui stocke le transformateur convertisseur, et
un espacement est prévu entre l'enroulement secondaire et l'enroulement tertiaire, et
l'enroulement secondaire et l'enroulement tertiaire sont placés de sorte qu'un flux de fuite de courant continu, CC, généré depuis l'enroulement secondaire passe à travers le noyau de fer et l'espacement et un flux de fuite CC généré depuis l'enroulement secondaire passe à travers le réservoir et l'espacement.

**2.** Dispositif de conversion d'énergie selon la revendication 1, dans lequel l'enroulement primaire est placé entre l'enroulement secondaire et l'enroulement tertiaire.

**3.** Dispositif de conversion d'énergie selon la revendication 1 ou 2, dans lequel une direction d'enroulement de l'enroulement secondaire et une direction d'enroulement de l'enroulement tertiaire sont opposées l'une à l'autre.

**4.** Dispositif de conversion d'énergie selon l'une quelconque des revendications 1 à 3, dans lequel l'enroulement secondaire et l'enroulement tertiaire sont soumis respectivement à une liaison en étoile, et un point neutre de l'enroulement secondaire et un point neutre de l'enroulement tertiaire sont reliés l'un à l'autre.

**5.** Dispositif de conversion d'énergie selon la revendication 4, comprenant en outre un enroulement de stabilisation placé adjacent au noyau de fer.

**6.** Dispositif de conversion d'énergie selon l'une quelconque des revendications 1 à 3, dans lequel l'enroulement secondaire et l'enroulement tertiaire sont soumis respectivement à une liaison en triangle, et un point neutre de l'enroulement secondaire et un point neutre de l'enroulement tertiaire dans une même phase sont reliés l'un à l'autre pour chaque phase.

**7.** Dispositif de conversion d'énergie selon la revendication 6, dans lequel l'enroulement secondaire et l'enroulement tertiaire sont chacun divisés en une pluralité de pièces dans une direction radiale du noyau de fer.

1

4

IRON CORE

PRIMARY WINDING

SECONDARY WINDING

2

TERTIARY WINDING

3

THREE-PHASE AND THREE-WINDING
TRANSFORMER A

**FIG. 1**

1

4

IRON CORE

2

3

THREE-PHASE AND THREE-WINDING
TRANSFORMER A

**FIG. 2**

THREE-PHASE AND THREE-
WINDING TRANSFORMER A

R-PHASE

S-PHASE

T-PHASE

PRIMARY
WINDING 1

NP_R2

NP_R3

NP_S3

Rp1

Rp2

Tp2

Tp1

Sp1

Sp2

NP_T2

SECONDARY
WINDING 2

NP_S2

Rn1

Rn2

Tn2

Tn1

Sn1

Sn2

NP_T3

TERTIARY
WINDING 3

Up

Vp

Wp

Un

Vn

Wn

DC POWER
SUPPLY B

**FIG. 3**

20

21U

22U

C

=

21X

30

22X

**FIG. 4**

FIG. 5

MAGNETIC-PATH LENGTH

DC LEAKAGE FLUX
(NOT INTERLINKED WITH TERTIARY)

IRON CORE

TANK (IRON)

SECONDARY WINDING

DC LEAKAGE FLUX
(NOT INTERLINKED WITH SECONDARY)

TERTIARY WINDING

*FIG. 6A*

DC LEAKAGE FLUX
(NOT INTERLINKED
WITH SECONDARY)

MAGNETIC-
PATH LENGTH

IRON CORE

SECONDARY WINDING

TERTIARY WINDING

TANK (IRON)

DC LEAKAGE FLUX
(NOT INTERLINKED
WITH TERTIARY)

*FIG. 6B*

**FIG. 7**

**FIG. 8**

**FIG. 9**

FIG. 10A

FIG. 10B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017211528 A1
- JP H06333754 A
- JP S52207 B
- JP 2016135054 A